(19) Europäisches Patentamt
European Patent Office
Office européen des brevets

(11) **EP 3 754 252 B1**

(12) **EUROPEAN PATENT SPECIFICATION**

(45) Date of publication and mention
of the grant of the patent:
**06.10.2021 Bulletin 2021/40**

(51) Int Cl.:
***F21S 10/02*** *(2006.01)*  ***F21V 23/00*** *(2015.01)*
***H05B 45/20*** *(2020.01)*  *F21Y 115/10* *(2016.01)*
*F21Y 113/10* *(2016.01)*

(21) Application number: **20181102.3**

(22) Date of filing: **19.06.2020**

(54) **LIGHTING APPARATUS**

BELEUCHTUNGSVORRICHTUNG

APPAREIL D'ÉCLAIRAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2019 CN 201910541248**

(43) Date of publication of application:
**23.12.2020 Bulletin 2020/52**

(73) Proprietor: **Xiamen Leedarson Lighting Co., Ltd.
Xiamen, Fujian 361010 (CN)**

(72) Inventors:
• **ZENG, Changjing
Huli District, Xiamen, Fujian 361010 (CN)**
• **CHEN, Yiwei
Huli District, Xiamen, Fujian 361010 (CN)**

(74) Representative: **Häckel, Stefan
Von Rohr
Patentanwälte Partnerschaft mbB
Rüttenscheider Straße 62
45130 Essen (DE)**

(56) References cited:
**US-A1- 2008 238 335    US-A1- 2010 295 464
US-A1- 2012 326 627    US-A1- 2014 167 645
US-A1- 2015 029 713    US-A1- 2015 108 921
US-A1- 2017 278 829**

## Description

### FIELD

The present invention is related to a lighting apparatus and more particularly related to a light apparatus with more flexible light parameter settings. In particular, the present invention relates to a light apparatus according to the preamble of claim 1.

### BACKGROUND

The time when the darkness is being lighten up by the light, human have noticed the need of lighting up this planet. Light has become one of the necessities we live with through the day and the night. During the darkness after sunset, there is no natural light, and human have been finding ways to light up the darkness with artificial light. From a torch, candles to the light we have nowadays, the use of light have been changed through decades and the development of lighting continues on.

Early human found the control of fire which is a turning point of the human history. Fire provides light to bright up the darkness that have allowed human activities to continue into the darker and colder hour of the hour after sunset. Fire gives human beings the first form of light and heat to cook food, make tools, have heat to live through cold winter and lighting to see in the dark.

Lighting is now not to be limited just for providing the light we need, but it is also for setting up the mood and atmosphere being created for an area. Proper lighting for an area needs a good combination of daylight conditions and artificial lights. There are many ways to improve lighting in a better cost and energy saving. LED lighting, a solid-state lamp that uses light-emitting diodes as the source of light, is a solution when it comes to energy-efficient lighting. LED lighting provides lower cost, energy saving and longer life span.

The major use of the light emitting diodes is for illumination. The light emitting diodes is recently used in light bulb, light strip or light tube for a longer lifetime and a lower energy consumption of the light. The light emitting diodes shows a new type of illumination which brings more convenience to our lives. Nowadays, light emitting diode light may be often seen in the market with various forms and affordable prices.

After the invention of LEDs, the neon indicator and incandescent lamps are gradually replaced. However, the cost of initial commercial LEDs was extremely high, making them rare to be applied for practical use. Also, LEDs only illuminated red light at early stage. The brightness of the light only could be used as indicator for it was too dark to illuminate an area. Unlike modern LEDs which are bound in transparent plastic cases, LEDs in early stage were packed in metal cases.

In 1878, Thomas Edison tried to make a usable light bulb after experimenting different materials. In November 1879, Edison filed a patent for an electric lamp with a carbon filament and keep testing to find the perfect filament for his light bulb. The highest melting point of any chemical element, tungsten, was known by Edison to be an excellent material for light bulb filaments, but the machinery needed to produce super-fine tungsten wire was not available in the late 19th century. Tungsten is still the primary material used in incandescent bulb filaments today.

Early candles were made in China in about 200 BC from whale fat and rice paper wick. They were made from other materials through time, like tallow, spermaceti, colza oil and beeswax until the discovery of paraffin wax which made production of candles cheap and affordable to everyone. Wick was also improved over time that made from paper, cotton, hemp and flax with different times and ways of burning. Although not a major light source now, candles are still here as decorative items and a light source in emergency situations. They are used for celebrations such as birthdays, religious rituals, for making atmosphere and as a decor.

Illumination has been improved throughout the times. Even now, the lighting device we used today are still being improved. From the illumination of the sun to the time when human can control fire for providing illumination which changed human history, we have been improving the lighting source for a better efficiency and sense. From the invention of candle, gas lamp, electric carbon arc lamp, kerosene lamp, light bulb, fluorescent lamp to LED lamp, the improvement of illumination shows the necessity of light in human lives.

There are various types of lighting apparatuses. When cost and light efficiency of LED have shown great effect compared with traditional lighting devices, people look for even better light output. It is important to recognize factors that can bring more satisfaction and light quality and flexibility.

US 2012/0326627 A1 relates to systems and methods for controlling the emission of white light. In certain embodiments, the systems and method relate to controlling white light emitted from a plurality of light-emitting diodes.

US 2010/0295464 A1 relates to an illuminating device comprising semiconductor light-emitting devices employing a semiconductor light-emitting element, wherein outputted light is stably combined, separation of light is inhibited, and color tone is variable.

US 2015/0108921 A1 relates to a tunable lighting system and method for providing a lighting output from a lighting system capable of emitting light within a lighting system color gamut.

US 2008/238335 A1 relates to a solid state light source having first and second component light sources and an interface circuit and a method for making the same.

## SUMMARY

The proposed lighting apparatus includes a first LED module, a second LED module and a third LED module.

The first LED module emits a first light of a first color temperature. The second LED module emits a second light of a second color temperature. The third LED module emits a third light of a third color temperature.

A driver is used for generating a first driving power, a second driving power and a third driving power respectively supplying to the first LED module, the second LED module and the third LED module.

A controller is for determining a power ratio among the first driving power, the second driving power and the third driving power corresponding to a mixed light with a target color temperature mixed by the first light, the second light and the third light. The mixed lights of different target color temperatures have chroma coordinates being within a predetermined chroma range.

The percentages of the Luminous flux of the first LED module, the second LED module and the third LED module are calculated based on following Formula 1:

$$
\begin{bmatrix} Y_{W1} \\ Y_{W2} \\ Y_{W3} \end{bmatrix} = \begin{bmatrix} \dfrac{x_{W1}}{y_{W1}} & \dfrac{x_{W2}}{y_{W2}} & \dfrac{x_{W3}}{y_{W3}} \\ 1 & 1 & 1 \\ \dfrac{1-x_{W1}-y_{W1}}{y_{W1}} & \dfrac{1-x_{W2}-y_{W2}}{y_{W2}} & \dfrac{1-x_{W3}-y_{W3}}{y_{W3}} \end{bmatrix}^{-1} \begin{bmatrix} \dfrac{x}{y} \\ 1 \\ \dfrac{1-x-y}{y} \end{bmatrix} \qquad \text{Formula 1}
$$

In the Formula 1, $Y_{W1}$ is the percentage of the Luminous flux of the first white light source.

$Y_{W2}$ is the percentage of the Luminous flux of the second white light source.

$Y_{W3}$ is the percentage of the Luminous flux of the third light source.

$(x_{W1}, y_{W1})$ is the color coordinates of the first white light source.

$(x_{W2}, y_{W2})$ is the color coordinates of the second white light source.

$(x_{W3}, y_{W3})$ is the color coordinates of the third light source.

$(x, y)$ is the color coordinates of the target color temperature.

In some embodiments, the predetermined chroma range is corresponding to a Planckian locus.

In some embodiments, the chroma coordinates of different mixed lights with different target color temperatures are close to the Planckian locus within a predetermined threshold.

In some embodiments, the predetermined threshold is less than 10% of a maximum range.

In some embodiments, the controller has multiple chroma range options to select in addition to the Planckian locus.

In some embodiments, the lighting apparatus may also include a manual switch for a user to select one from the multiple chroma range options.

In some embodiments, the third LED module includes a color LED device adding a color component to adjust the chroma coordinate of the mixed light.

In some embodiments, multiple power ratios of the first driving power, the second driving power and the driving power are recorded in a memory device. The controller retrieves the power ratios and generates corresponding control signals to the driver to generate corresponding first driving powers, second driving powers, third driving powers for different target color temperatures.

In some embodiments, for target color temperatures not having corresponding power ratios, multiple adjacent power ratios are retrieved to calculate the power ratio by the controller.

In some embodiments, the lighting apparatus may also include a wireless module for receiving a table containing power ratios corresponding to different target color temperatures. The controller uses the table to control the driver to generate the first driving power, the second driving power and the third driving power.

In some embodiments, the lighting apparatus may also include a manual switch having multiple options corresponding to multiple target color temperatures, each option corresponds to one power ratio to be used by the controller.

In some embodiments, the first LED module has multiple chroma coordinates under different intensities, the different chroma coordinates under different intensities are referenced when determining the power ratios.

In some embodiments, a chroma measuring device is used for finding power ratios corresponding to different target color temperatures during manufacturing. The found power ratios are stored in a memory device used by the controller to determine the power ratios corresponding to target color temperatures.

In some embodiments, the driver includes a PWM circuit for generating the first driving power, the second driving power and the third driving power based on duty ratios for turning on the first LED module, the second LED module and the third LED modules corresponding to the power ratios.

In some embodiments, multiple sequence orders are mixed for turning on the first LED module, the second LED module and the third LED module.

In some embodiments, the first LED module, the second LED module and the third LED module share the same PWM circuit and only one of the first LED module, the second LED module and the third LED module is turned on at any given timing.

In some embodiments, the first LED module, the second LED module and the third LED module respectively have multiple LED devices, at least two LED devices from at least two of the first LED module, the second LED module, and the third LED module are turned on at a given timing.

In some embodiments, the power ratio corresponds to a first driving current, a second driving current and a third driving current continuously generated by the driver to drive the first LED module, the second LED module, and the third LED module.

In some embodiments, a mixed color rendering index is also considered to determine the power ratio corresponding to the target color temperature.

## BRIEF DESCRIPTION OF DRAWINGS

Fig. 1 illustrates a flowchart showing a method for adjusting a desired output.
Fig. 2 illustrates a lighting apparatus embodiment.
Fig. 3 shows a chroma space.
Fig. 4 shows a flowchart illustrating a method for calculating parameters.
Fig. 5 shows a structure as an embodiment.
Fig. 6 shows a flowchart for calculating parameters.
Fig. 7 shows another embodiment.
Fig. 8A shows an order sequence example in a PWM driving scheme.
Fig. 8B shows another order sequence example in a PWM driving scheme.

## DETAILED DESCRIPTION

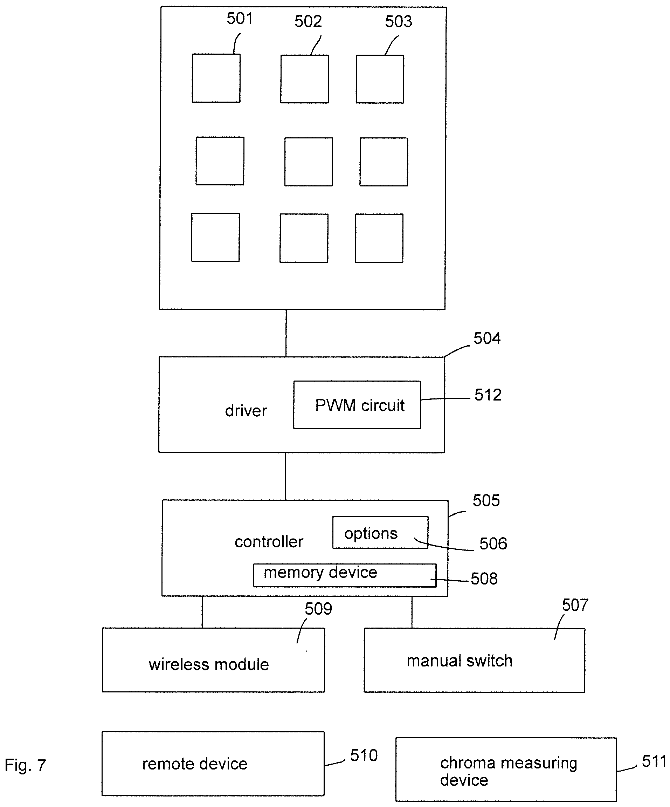

In Fig. 7, a lighting apparatus includes a first LED module 501, a second LED module 502 and a third LED module 503, a driver 504 and a controller 505.

The first LED module 501 emits a first light of a first color temperature. The second LED module 502 emits a second light of a second color temperature. The third LED module 503 emits a third light of a third color temperature.

The driver 504 is used for generating a first driving power, a second driving power and a third driving power respectively supplying to the first LED module 501, the second LED module 502 and the third LED module 503.

In some other embodiments, there may be more than three LED modules for mixing a desired color temperature. In such case, four or more LED modules are activated for mixing a desired target color temperature. In some other examples, three LED modules selected from more than three LED modules are used for mixing a target color temperature, but different three LED modules are selected corresponding to different color temperatures.

The controller 505 is for determining a power ratio among the first driving power, the second driving power and the third driving power corresponding to a mixed light with a target color temperature mixed by the first light, the second light and the third light. The mixed lights of different target color temperatures have chroma coordinates being within a predetermined chroma range.

In some embodiments, the predetermined chroma range is corresponding to a Planckian locus. For example, the mixed lights of different color temperatures respectively have chroma coordinates. The chroma coordinates among different color temperatures are falling close or directly on a curve line in a chroma space, e.g. a Planckian locus.

In physics and color science, the Planckian locus or black body locus is the path or locus that the color of an incandescent black body would take in a particular chromaticity space as the blackbody temperature changes. It goes from deep red at low temperatures through orange, yellowish white, white, and finally bluish white at very high temperatures.

A color space is a three-dimensional space; that is, a color is specified by a set of three numbers (the CIE coordinates X, Y, and Z, for example, or other values such as hue, colorfulness, and luminance) which specify the color and brightness of a particular homogeneous visual stimulus. A chromaticity is a color projected into a two-dimensional space that ignores brightness. For example, the standard CIE XYZ color space projects directly to the corresponding chromaticity space specified by the two chromaticity coordinates known as x and y, making the familiar chromaticity diagram shown in the figure. The Planckian locus, the path that the color of a black body takes as the blackbody temperature changes, is often shown in this standard chromaticity space.

The actual chroma coordinates may not fall directly on such curve line, but may be within a closed range of the curve line. For example, there are certain offsets from perfect coordinates of the desired curve line, and that is why the chroma range is used for describing such feature. Designers may determine the threshold, i.e. the accuracy of mimicking a desired curve line of chroma coordinates along color temperature variation.

In some embodiments, the chroma coordinates of different mixed lights with different target color temperatures are close to the Planckian locus within a predetermined threshold.

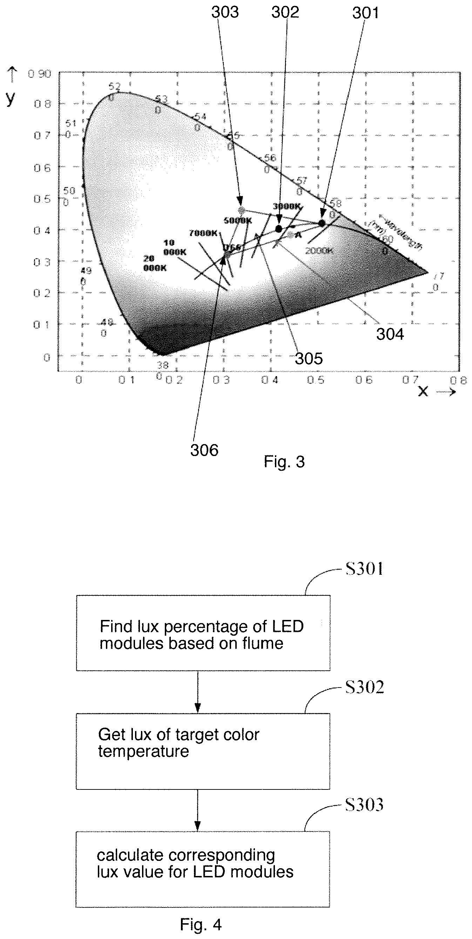

In some embodiments, the predetermined threshold is less than 10% of a maximum range. For example, Fig. 3 shows a popular chroma two-dimension space, the offset deviation from the perfect chroma range is less than 10%, if the difference between the coordinates with the perfect coordinates is found, the number is divided with a maximum value of the coordinates to be kept within 10%, which means it is close enough to the desired curve line in the chroma space.

In Fig. 7, the controller has multiple chroma range options 506 to select in addition to the Planckian locus.

In Fig. 7, the lighting apparatus may also include a manual switch 507 for a user to select one from the multiple chroma range options.

In some embodiments, the third LED module includes a color LED device adding a color component to adjust the chroma coordinate of the mixed light.

In Fig. 7, multiple power ratios of the first driving power, the second driving power and the driving power are recorded in a memory device 508. The controller retrieves the power ratios and generates corresponding control signals to the driver to generate corresponding first driving powers, second driving powers, third driving powers for different target color temperatures.

In some embodiments, for target color temperatures not having corresponding power ratios, multiple adjacent power ratios are retrieved to calculate the power ratio by the controller.

In Fig. 7, the lighting apparatus may also include a wireless module 509 for receiving a table from a remote device 510, the table containing power ratios corresponding to different target color temperatures. The controller uses the table to control the driver to generate the first driving power, the second driving power and the third driving power.

In some embodiments, the lighting apparatus may also include a manual switch having multiple options corresponding to multiple target color temperatures, each option corresponds to one power ratio to be used by the controller.

In some embodiments, the first LED module has multiple chroma coordinates under different intensities, the different chroma coordinates under different intensities are referenced when determining the power ratios.

In Fig. 7, a chroma measuring device 511 is used for finding power ratios corresponding to different target color temperatures during manufacturing. The found power ratios are stored in a memory device used by the controller to determine the power ratios corresponding to target color temperatures.

In Fig. 7, the driver includes a PWM circuit 512 for generating the first driving power, the second driving power and the third driving power based on duty ratios for turning on the first LED module, the second LED module and the third LED modules corresponding to the power ratios.

In some embodiments, multiple sequence orders are mixed for turning on the first LED module, the second LED module and the third LED module.

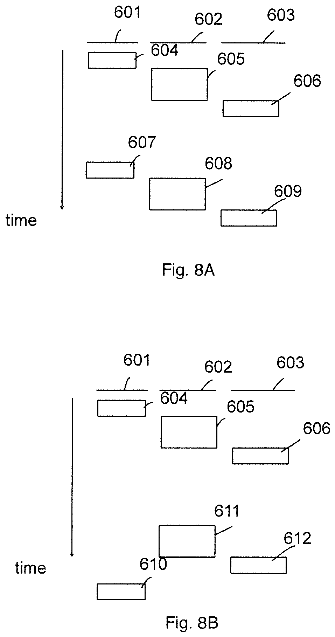

In Fig. 8A, the first LED module, the second LED module and the third LED module are turned according to timing sequence illustrated. Specifically, the three columns 601, 602, 603 correspond to turn-on status the first LED module, the second LED module and the third LED module.

In Fig. 8A, the first LED module is turned on for a time 604, the second LED module is turned on for a time 605 and then the third LED module is turned on for a time 606. A time break is provided corresponding to overall duty ratio of the LED modules. Then, the same order sequence for turning on the LED modules are kept, as shown in the time blocks 607, 608, 609.

In Fig. 8B, unlike Fig. 8A, the time blocks 610, 611, 612 to turn on the first LED module, the second LED module and the third LED module are different from previous order sequence. Such re-arrangement makes visual effect more stable, without showing a recognized pattern.

In some embodiments, the first LED module, the second LED module and the third LED module share the same PWM circuit and only one of the first LED module, the second LED module and the third LED module is turned on at any given timing.

In some embodiments, the first LED module, the second LED module and the third LED module respectively have multiple LED devices, at least two LED devices from at least two of the first LED module, the second LED module, and the third LED module are turned on at a given timing.

In some embodiments, the power ratio corresponds to a first driving current, a second driving current and a third driving current continuously generated by the driver to drive the first LED module, the second LED module, and the third LED module.

In some embodiments, a mixed color rendering index is also considered to determine the power ratio corresponding to the target color temperature.

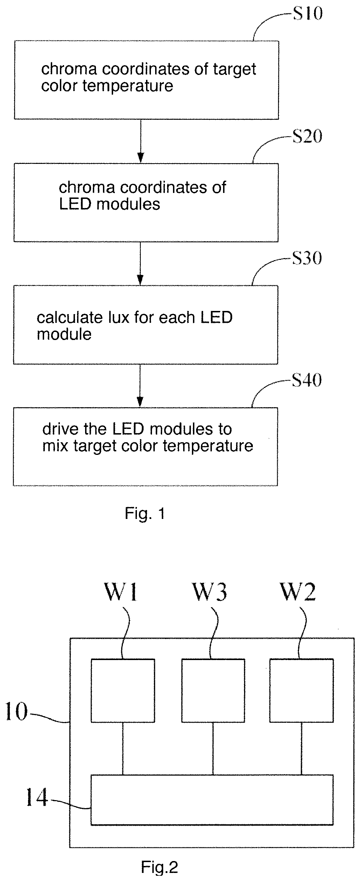

Please refer to Fig. 1. An embodiment provides a color temperature adjusting method includes at least the following steps.

STEP S10 : Receiving color coordinates of a target color temperature.

Please refer to Fig. 3. In some embodiments, the color coordinates of the target color temperature refers to the color coordinates of the color temperature on the CIE1931 Chromaticity diagram which may be marked as T(x, y). The T of T(x, y) is the target color temperature and the unit is Kelvin (K). The (x, y) is the X direction and the Y direction coordinate of the color temperature on the Chromaticity diagram.

The chroma coordinate 303 correspond to the third LED module, the chroma coordinate 301 correspond to the first LED module, and the chroma coordinate 306 correspond to the second LED module. If only two LED modules, i.e. the first LED module and the second LED module, the mixed chroma coordinates follows a straight line 304. By adding the third LED module to mix the target color temperature, the chroma coordinates 305 of the output light is getting closer to the desired curve line, like the Pluckian locus.

The color coordinates of the target color temperature may be determined according to the need of a user. For example, the color coordinates of the target color temperature may be a color temperature related to different color coordinates on the color temperature line, the color coordinates on a Plunk curve of the Chromaticity diagram or the color coordinates of any other points on the Chromaticity diagram that may not be limited here. Optionally, the color coordinates of the target color temperature is on the Plunk curve for having a white light similar to a natural white light.

STEP S20 : Receiving the color coordinates of every light source in a light source module.

Please refer to Fig. 2. In some embodiments. The light source module 10 provides an illumination light and the color temperature of the light may be adjusted. The light source module 10 includes at least a first white light source W1, a second white light source W2 and a third light source W3. The first white light source W1, the second white light source W2 and the third light W3 provide the light into the illumination light after light mixing. In order to have the illumination light after light mixing having the related color coordinates of the determined color temperature, Luminous flux of every light source of the light source module 10 may be adjusted. First of all, the color coordinates of each light source may be needed.

Every light source is determined, thus, the color temperature of every light source and the related color coordinates are determined. Take the light source module 10 including three light sources as an example, the color temperature and the color coordinates of the first white light source W1 are marked as T1(xW1, yW1). The T1 is the color temperature of the first white light source W1, and the (xW1, yW1) is the X direction and the Y direction coordinate on the Chromaticity diagram. The color temperature and the color coordinates of the second white light source W2 are marked as T2(xW2, yW2). The T2 is the color temperature of the second white light source W2, and the (xW2, yW2) is the X direction and the Y direction coordinate on the Chromaticity diagram. The color temperature and the color coordinates of the third light source W3 are marked as T3(xW3, yW3). The T3 is the color temperature of the third light source W3, and the (xW3, yW3) is the X direction and the Y direction coordinate on the Chromaticity diagram.

In some embodiments, the color coordinates of the first white light source W1 may be related to the color coordinate of the color temperature T1 on the color temperature line or may also be the coordinate of the color temperature T1 on the Plunk curve as long as the light is produced in white. The color coordinates of the second white light source W2 may be related to the color coordinate of the color temperature T2 on the color temperature line or may also be the coordinate of the color temperature T2 on the Plunk curve as long as the light is produced in white. It is understood as the first white light source W1 and the second white light source W2 have different color temperature and different color coordinates for ensuring every light source may be mixed.

STEP S30: According to the color coordinates of the target color temperature and the color coordinates of the target color temperature, find the Luminous flux of every light source.

As the description in S20, in some embodiments, the Luminous flux of every light source of the light source module 10 being adjusted for having the illumination light of every light source after light mixing, thus, the Luminous flux of every light source needs to be determined.

Please refer to Fig. 3. In an embodiment, the color coordinates of the first white light source W1, the second white light source W2 and the third white light source W3 are different. The color coordinates of the three light source on the Chromaticity diagram connect together forming a triangle, thus, the color coordinates of the illumination light of the three light sources after light mixing may be inside the trigonal area. The large of the area of the trigonal area, the more illumination light from different color coordinates it gets, the larger is the adjusting range.

According to the color coordinates of the target color temperature and the color coordinates of every light source for receiving the Luminous flux of the light source, ensures whether the color coordinates of the target color temperature are in the trigonal area formed by the color coordinates of the three light sources first. When the color coordinates of the target color temperature is inside the trigonal area, the Luminous flux may be received through the light mixing of the three light sources. When the color coordinates of the target color temperature is outside the trigonal area, the Luminous flux may not be received from the light mixing of the three light sources and may need the following steps. In some embodiments, the amount of the light source may be four or more, and the steps are familiar to the situation of three light sources.

STEP S40: According to the light mixing of the Luminous flux of every light source, the illumination light of the target color temperature may be needed.

After receiving the Luminous flux of every light source, only have to control the related Luminous flux produced by every light source and output the light of every light source after light mixing for having the illumination light of the target color temperature.

In an embodiment, the center of the color coordinates of the target color temperature may be on the Plunk curve and the related light to the Plunk curve is natural white light, thus, through the above ways for receiving the illumination light closed to the natural white light which has a great effect in illumination and also meets the need of a user.

In some embodiments, the advantage of the color temperature adjusting methods at least are that the light source module of the color temperature adjusting now often uses two color temperature of light sources. Through controlling the Luminous flux of the two light sources for adjusting the color temperature may enlarge the range of adjusting the color temperature but disregard the quality of the illumination light. The reason is that the coordinate of the light mixing of two color temperature are on the connecting line of the color coordinate of two light sources, thus, the light mixing often diverges from the Plunk curve of the white light, receiving the light tending red that produce a white light different from the natural white light.

In an embodiment shows a totally different way to adjust the color temperature of the light source and produce the illumination light similar to the natural white light. Specifically, in an embodiment, at least three different color temperature of light sources is provided. Two of the three light sources are white light. When the center of the color coordinates of the target color temperature is on the Plunk curve, through the adjustment of the Luminous flux of every light source which may let the center of the color coordinate of the illumination light after light mixing of every light source on the Plunk curve for ensuring the white light closed to the natural white light. The color tolerance meets the standard of the design and has a great effect in illumination which meets the need of the user. The center of the color coordinates of the target color temperature may be at the other position outside the Plunk curve as long as being in the area formed by every light source, through the above way may have the illumination light of the target color temperature and color coordinates.

Please refer to Fig. 4. In an embodiment, the STEP S30 includes:
STEP S301 : According to the color coordinates of the target color temperature and the color coordinates of every light source, find a percentage of the Luminous flux of every light source.

In an embodiment, the amount of the light source is three as an example, the percentage of the Luminous flux of every light source may be valued through the following Formula 1:

$$\begin{bmatrix} Y_{W1} \\ Y_{W2} \\ Y_{W3} \end{bmatrix} = \begin{bmatrix} \dfrac{x_{W1}}{y_{W1}} & \dfrac{x_{W2}}{y_{W2}} & \dfrac{x_{W3}}{y_{W3}} \\ 1 & 1 & 1 \\ \dfrac{1-x_{W1}-y_{W1}}{y_{W1}} & \dfrac{1-x_{W2}-y_{W2}}{y_{W2}} & \dfrac{1-x_{W3}-y_{W3}}{y_{W3}} \end{bmatrix}^{-1} \begin{bmatrix} \dfrac{x}{y} \\ 1 \\ \dfrac{1-x-y}{y} \end{bmatrix} \qquad \text{Formula 1}$$

In the Formula 1, $Y_{W1}$ is the percentage of the Luminous flux of the first white light source.

$Y_{W2}$ is the percentage of the Luminous flux of the second white light source.

$Y_{W3}$ is the percentage of the Luminous flux of the third light source.

$(x_{W1}, y_{W1})$ is the color coordinates of the first white light source.

$(x_{W2}, y_{W2})$ is the color coordinates of the second white light source.

$(x_{W3}, y_{W3})$ is the color coordinates of the third light source.

$(x, y)$ is the color coordinates of the target color temperature.

Through the above Formula 1, after having the color coordinates of the first white light source W1, the second white light source W2 and the third light source W3 and determined the color coordinates of the target color temperature, the percentage of the Luminous flux of the first white light source W1, the second white light source W2 and the third light source W3 may be valued through the Formula 1.

In an embodiment, the target color temperature may include multiple color temperatures in the range of one color temperature. For example, the range of the color temperature may be 1800K to 10000K. Take the range of the color temperature in 2200K to 6500K as an example, the color temperature of then may be 2200K, 2700K, 3000K, 3500K, 4000K, 4500K, 5000K, 5700K and 6500K. For every color temperature, after determining the related color coordinates of each color temperature, the percentage of the Luminous flux of the first white light source W1, the second white light source W2 and the third light source W3 may be valued through the Formula 1. The range of the color temperature may be other value and not be limited to the above description.

STEP S302 : Receiving the Luminous flux of the target color temperature is marked as Φ and the unit is lumen (lm). The Luminous flux of the illumination light with the target color temperature may adjust according to the need.

STEP S303 : According to the Luminous flux of the illumination light of the target color temperature and the percentage of the Luminous flux of every light source for having the Luminous flux of the light source.

For example, the Luminous flux of the first white light source W1 is $\Phi1=\Phi YW1$, the Luminous flux of the second white light source W2 is $\Phi2=\Phi YW2$ and the Luminous flux of the third light source is $\Phi3=\Phi YW3$ for having the Luminous flux of every light source.

In an embodiment, through the above ways for receiving the illumination light, the color tolerance of every color temperature is less than or equal to 4SDCM (Standard Deviation Color matching) which meet the needs of the user for the use of the color tolerance under each color temperature but also achieve the requirement of the North American market.

Please refer to Fig. 3. In an embodiment, the color coordinates of the first white light source W1 and the color coordinates of the second white light source W2 are both on the Plunk curve. Considering the features of the Plunk curve, the color coordinates of the third light source W3 is above the Plunk curve, the first white light source W1, the second white light source W2 and the third light source W3 form a trigonal area. In the trigonal area includes the Plunk curve between the color temperature of the first white light source W1 and the second white light source W2. Thus, through the adjustment of the Luminous flux of the first white light source W1, the second white light source W2 and the third light source W3 for receiving the white light of the color coordinates on the Plunk curve.

Specifically, the third light source W3 is a green light source which the color coordinates on the Chromaticity diagram is above the Plunk curve for producing green light area. While the first white light source W1, the second white source W2 and the third white light source W3 forms a trigonal area which have a larger area for adjusting the color temperature of the illumination light and the color coordinates in a larger area.

In the following embodiment, the light source 10 includes the first white light source W1, the second white light source W2 and the third light source W3. Among them, the color temperature of the first white light source is 2200K, the color temperature of the second white light source 11 is 6500K, so the adjusting range of the color temperature of the light source module 10 is 2200K to 6500K. The illumination light produces by the light source module 10 is white light and the color coordinates of the white light is on the Plunk curve. The illumination light of the target color temperature and the related color coordinates is shown below:

| Type | Color Temperature | X Coordinate | Y Coordinate |
|---|---|---|---|
| First White Light Source | 2200K | 0.5018 | 0.4153 |
| Second White Light Source | 6500K | 0.3123 | 0.3283 |
| Third Light Source | | 0.35 | 0.45 |
| Illumination Light | 2700K | 0.4578 | 0.4101 |
| | 3000K | 0.4339 | 0.4033 |
| | 3500K | 0.4073 | 0.393 |
| | 4000K | 0.3818 | 0.3797 |
| | 4500K | 0.3613 | 0.367 |
| | 5000K | 0.3446 | 0.3551 |
| | 5700K | 0.3287 | 0.3425 |

Considering the Luminous flux Φ of the illumination light produced by the light source module 10 is 1000lm (lumen). According to the percentage of the Luminous flux of every light source, receiving the Luminous flux of every light source is shown in the following chart.

| Light Source | First White Light Source | Second White Light Source | Third Light Source |
|---|---|---|---|
| 2200K | 100% | 0% | 0% |
| 2700K | 74.9% | 9.4% | 15.7% |
| 3000K | 62.4% | 17.4% | 20.2% |
| 3500K | 49.2% | 29.1% | 21.7% |
| 4000K | 36.1% | 41.8% | 22.1% |
| 4500K | 25.8% | 55.2% | 19.0% |
| 5000K | 17.3% | 68.0% | 14.7% |
| 5700K | 9.0% | 82.6% | 8.4% |
| 6500K | 0% | 100% | 0% |

Finnally, according to the Luminous flux, controlling the Luminous flux of the first white light sourceW1, the second white light source W2 and the third light source W3 and then light mixing for receiving the illumination light closed to the natural white light, and the color tolerance related to each of the color temperature is less than and equal to 4SDCM which meets the standard of design and has a better color consistency for lighting.

| Light Source | First White Light Source | Second White Light Source | Third Light Source |
|---|---|---|---|
| 2200K | 1000lm | 0 | 0 |
| 2700K | 749 lm | 94 lm | 157 lm |
| 3000K | 624 lm | 174 lm | 202 lm |
| 3500K | 492 lm | 291 lm | 217 lm |
| 4000K | 361 lm | 418 lm | 221 lm |
| 4500K | 258 lm | 552 lm | 190 lm |
| 5000K | 173 lm | 680 lm | 147 lm |
| 5700K | 90 lm | 826 lm | 84 lm |
| 6500K | 0 | 1000 lm | 0 |

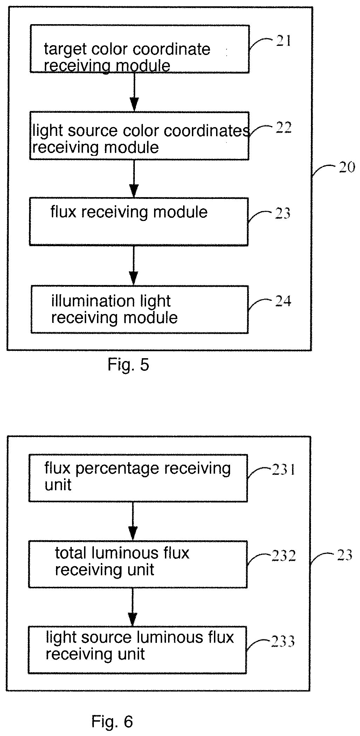

Please refer to Fig. 5. In an embodiment, a color temperature adjusting device 20 is provided. The color temperature adjusting device 20 includes a target color coordinates receiving module 21, a light source color coordinates receiving module 22, a light source Luminous flux receiving module 23 and an illumination light receiving module 24. Among them, the target color coordinates receiving module 21 is for receiving the color coordinates of the target color temperature. The light source color coordinates receiving module 22 is for receiving the color coordinates of the light source in the light source module. The light source module includes ate least the first white light source, the second white light source and the third light source. The light source Luminous flux receiving module 23 is for receiving the Luminous flux of the light source according to the color coordinates of the target color temperature. The illumination light receiving module 24 is for receiving the illumination light with the target color temperature according to the light mixing of the Luminous flux of the light source.

Please refer to Fig. 6. Specifically, the light source Luminous flux receiving module 23 includes a Luminous flux percentage receiving unit 231, a total Luminous flux receiving unit 232 and a light source Luminous flux receiving unit 233. Among them, the Luminous flux percentage receiving unit 231 is for receiving the percentage of the Luminous flux according to the color coordinates of the target color temperature and every light source. The total Luminous flux receiving unit 232 is for receiving the Luminous flux of the illumination light of the target color temperature. The light source Luminous flux receiving unit 233 is for receiving the Luminous of every light source according to the Luminous flux of the illumination of the target color temperature and the percentage of the Luminous flux of every light source.

Please refer to Fig. 2. In an embodiment, a light source module 10 is provided for providing the illumination light and the color temperature of the illumination light is adjustable. The light source 10 includes at least the first white light source W1, the second white light source W2 and the third light source. Among them, the first white light source W1, the second white light source W2 and the third light source provide the illumination light after light mixing. Through the adjustment of the Luminous flux of the first white light source W1, the second white light source W2 and the third light source W3, every standard of the illumination light after light mixing may be adjusted. For example, the color coordinates on the Chromaticity diagram, the color temperature and the color tolerance...etc.

In an embodiment, the first white light source W1, the second white light source W2 and the third light source W3 may be LED light source. The light source module 10 also includes a control unit 14. The control unit 14 and the first white light source W1, the second white light source W2 and the third light source W3 is connected together, at least for using to control the luminous flux of the first white light source W1, the second white light source W2 and the third light source W3 that the color temperature produced by the light source module 10 may be adjusted. The color temperature of the illumination light is adjusted in the way being described above for providing the white light which is closed to the natural white light. The related color tolerance of each color temperature is less than or equal to 4SDCM. The color tolerance meets the standard of the design and has a great effect in illumination which meets the need of the user.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

**Claims**

1. A lighting apparatus comprising:

   a first LED module (501) emitting a first light of a first color temperature;
   a second LED module (502) emitting a second light of a second color temperature;
   a third LED module (503) emitting a third light of a third color temperature;
   a driver (504) for generating a first driving power, a second driving power, a third driving power respectively supplying to the first LED module (501), the second LED module (502) and the third LED module (503); and
   a controller (505) for determining a power ratio among the first driving power, the second driving power and the third driving power corresponding to a mixed light with a target color temperature mixed by the first light, the second light and the third light, the mixed lights of different target color temperatures having chroma coordinates being within a predetermined chroma range,
   **characterized in that** percentages of the Luminous flux of the first LED module (501), the second LED module (502) and the third LED module (503) are calculated based on following Formula 1:

$$\begin{bmatrix} Y_{W1} \\ Y_{W2} \\ Y_{W3} \end{bmatrix} = \begin{bmatrix} \dfrac{x_{W1}}{y_{W1}} & \dfrac{x_{W2}}{y_{W2}} & \dfrac{x_{W3}}{y_{W3}} \\ 1 & 1 & 1 \\ \dfrac{1-x_{W1}-y_{W1}}{y_{W1}} & \dfrac{1-x_{W2}-y_{W2}}{y_{W2}} & \dfrac{1-x_{W3}-y_{W3}}{y_{W3}} \end{bmatrix}^{-1} \begin{bmatrix} \dfrac{x}{y} \\ 1 \\ \dfrac{1-x-y}{y} \end{bmatrix} \quad \text{Formula 1}$$

   , in the Formula 1, $Y_{W1}$ is the percentage of the Luminous flux of the first white light source,
   $Y_{W2}$ is the percentage of the Luminous flux of the second white light source,
   $Y_{W3}$ is the percentage of the Luminous flux of the third light source,
   $(x_{W1}, y_{W1})$ is the color coordinates of the first white light source,
   $(x_{W2}, y_{W2})$ is the color coordinates of the second white light source,
   $(x_{W3}, y_{W3})$ is the color coordinates of the third light source, and
   $(x, y)$ is the color coordinates of the target color temperature.

2. The lighting apparatus of claim 1, wherein the predetermined chroma range is corresponding to a Planckian locus.

3. The lighting apparatus of claim 1 or 2, wherein the chroma coordinates of different mixed lights with different target color temperatures are close to the Planckian locus within a predetermined threshold.

4. The lighting apparatus of claim 3, wherein the predetermined threshold is less than 10% of a maximum range.

5. The lighting apparatus of any one of the preceding claims, wherein the controller (505) has multiple chroma range options (506) to select in addition to the Planckian locus.

6. The lighting apparatus of claim 5, further comprising a manual switch (507) for a user to select one from the multiple chroma range options (506).

7. The lighting apparatus of any one of the preceding claims, wherein the third LED module (503) comprises a color LED device adding a color component to adjust the chroma coordinate of the mixed light.

8. The lighting apparatus of any one of the preceding claims, wherein multiple power ratios of the first driving power, the second driving power and the driving power are recorded in a memory device (508), the controller (505) retrieves the power ratios and generates corresponding control signals to the driver (504) to generate corresponding first driving powers, second driving powers, third driving powers for different target color temperatures.

9. The lighting apparatus of claim 8, wherein for target color temperatures not having corresponding power ratios, multiple adjacent power ratios are retrieved to calculate the power ratio by the controller (505).

10. The lighting apparatus of claim 8 or claim 9, further comprising a wireless module (509) for receiving a table containing power ratios corresponding to different target color temperatures, the controller (505) uses the table to control the driver (504) to generate the first driving power, the second driving power and the third driving power.

11. The lighting apparatus of any one of the preceding claims, further comprising a manual switch (507) having multiple options corresponding to multiple target color temperatures, each option corresponds to one power ratio to be used by the controller (505).

12. The lighting apparatus of any one of the preceding claims, wherein the first LED module (501) has multiple chroma coordinates under different intensities, the different chroma coordinates under different intensities are referenced when determining the power ratios.

13. The lighting apparatus of any one of the preceding claims, wherein a chroma measuring device (511) is used for finding power ratios corresponding to different target color temperatures during manufacturing, the found power ratios are stored in a memory device (508) used by the controller (505) to determine the power ratios corresponding to target color temperatures.

14. The lighting apparatus of any one of the preceding claims, wherein the driver (504) comprises a PWM circuit (512) for generating the first driving power, the second driving power and the third driving power based on duty ratios for turning on the first LED module (501), the second LED module (502) and the third LED modules (503) corresponding to the power ratios.

**Patentansprüche**

1. Eine Beleuchtungsvorrichtung, umfassend:

ein erstes LED-Modul (501), das ein erstes Licht mit einer ersten Farbtemperatur ausstrahlt;
ein zweites LED-Modul (502), das ein zweites Licht mit einer zweiten Farbtemperatur ausstrahlt;
ein drittes LED-Modul (503), das ein drittes Licht mit einer dritten Farbtemperatur ausstrahlt;
einen Treiber (504) zum Erzeugen einer ersten Ansteuerungsleistung, einer zweiten Ansteuerungsleistung, einer dritten Ansteuerungsleistung, die jeweils das erste LED-Modul (501), das zweite LED-Modul (502) und das dritte LED-Modul (503) versorgen; und
einen Controller (505) zum Bestimmen eines Leistungsverhältnisses zwischen der ersten Ansteuerungsleistung, der zweiten Ansteuerungsleistung und der dritten Ansteuerungsleistung, korrespondierend zu einem gemischten Licht mit einer Zielfarbtemperatur, gemischt durch das erste Licht, das zweite Licht und das dritte Licht, wobei gemischte Lichter unterschiedlicher Zielfarbtemperaturen Chroma-Koordinaten aufweisen, die innerhalb eines vorbestimmten Chroma-Bereichs liegen,
**dadurch gekennzeichnet, dass** die prozentualen Anteile des Lichtstroms des ersten LED-Moduls (501), des zweiten LED-Moduls (502) und des dritten LED-Moduls (503) basierend auf der folgenden Formel 1 berechnet werden:

$$\begin{bmatrix} Y_{W1} \\ Y_{W2} \\ Y_{W3} \end{bmatrix} = \begin{bmatrix} \dfrac{x_{W1}}{y_{W1}} & \dfrac{x_{W2}}{y_{W2}} & \dfrac{x_{W3}}{y_{W3}} \\ 1 & 1 & 1 \\ \dfrac{1-x_{W1}-y_{W1}}{y_{W1}} & \dfrac{1-x_{W2}-y_{W2}}{y_{W2}} & \dfrac{1-x_{W3}-y_{W3}}{y_{W3}} \end{bmatrix}^{-1} \begin{bmatrix} \dfrac{x}{y} \\ 1 \\ \dfrac{1-x-y}{y} \end{bmatrix} \quad \text{Formel 1}$$

, in der Formel 1, ist $Y_{W1}$ der prozentuale Anteil des Lichtstroms der ersten weißen Lichtquelle,
$Y_{W2}$ ist der prozentuale Anteil des Lichtstroms der zweiten weißen Lichtquelle,
$Y_{W3}$ ist der prozentuale Anteil des Lichtstroms der dritten Lichtquelle,
$(x_{W1}, y_{W1})$ sind die Farbkoordinaten der ersten weißen Lichtquelle,
$(x_{W2}, y_{W2})$ sind die Farbkoordinaten der zweiten weißen Lichtquelle,
$(x_{W3}, y_{W3})$ sind die Farbkoordinaten der dritten Lichtquelle, und
$(x, y)$ sind die Farbkoordinaten der Zielfarbtemperatur.

2.  Die Beleuchtungsvorrichtung nach Anspruch 1, wobei der vorbestimmte Chroma-Bereich einem Planckschen Kurvenzug entspricht.

3.  Die Beleuchtungsvorrichtung nach Anspruch 1 oder 2, wobei die Chroma-Koordinaten unterschiedlicher gemischter Lichter mit unterschiedlichen Zielfarbtemperaturen innerhalb eines vorbestimmten Schwellenwerts nahe am Planckschen Kurvenzug liegen.

4.  Die Beleuchtungsvorrichtung nach Anspruch 3, wobei der vorbestimmte Schwellenwert weniger als 10 % eines maximalen Bereichs beträgt.

5.  Die Beleuchtungsvorrichtung nach einem der voranstehenden Ansprüche, wobei der Controller (505) zusätzlich zum Planckschen Kurvenzug mehrere Chroma-Bereich-Optionen (506) zur Auswahl hat.

6.  Die Beleuchtungsvorrichtung nach Anspruch 5, ferner umfassend einen manuellen Schalter (507) für einen Benutzer, um eine der mehreren Chroma-Bereich-Optionen (506) auszuwählen.

7.  Die Beleuchtungsvorrichtung nach einem der voranstehenden Ansprüche, wobei das dritte LED-Modul (503) eine Farb-LED-Einrichtung umfasst, die eine Farbkomponente hinzufügt, um die Chroma-Koordinate des gemischten Lichts einzustellen.

8.  Die Beleuchtungsvorrichtung nach einem der voranstehenden Ansprüche, wobei mehrere Leistungsverhältnisse der ersten Ansteuerungsleistung, der zweiten Ansteuerungsleistung und der Ansteuerungsleistung in einer Speichereinrichtung (508) aufgezeichnet sind, der Controller (505) die Leistungsverhältnisse abruft und entsprechende Steuersignale an den Treiber (504) erzeugt, um entsprechende erste Ansteuerungsleistungen, zweite Ansteuerungsleistungen, dritte Ansteuerungsleistungen für unterschiedliche Zielfarbtemperaturen zu erzeugen.

9.  Die Beleuchtungsvorrichtung nach Anspruch 8, wobei für Zielfarbtemperaturen, die keine entsprechenden Leistungsverhältnisse haben, mehrere benachbarte Leistungsverhältnisse abgerufen werden, um das Leistungsverhältnis durch den Controller (505) zu berechnen.

10. Die Beleuchtungsvorrichtung nach Anspruch 8 oder Anspruch 9, ferner umfassend ein drahtloses Modul (509) zum Empfangen einer Tabelle, die Leistungsverhältnisse enthält, die unterschiedlichen Zielfarbtemperaturen entsprechen, wobei der Controller (505) die Tabelle verwendet, um den Treiber (504) zu steuern, um die erste Ansteuerungsleistung, die zweite Ansteuerungsleistung und die dritte Ansteuerungsleistung zu erzeugen.

**11.** Die Beleuchtungsvorrichtung nach einem der voranstehenden Ansprüche, ferner umfassend einen manuellen Schalter (507) mit mehreren Optionen, die mehreren Zielfarbtemperaturen entsprechen, wobei jede Option einem vom Controller (505) zu verwendenden Leistungsverhältnis entspricht.

**12.** Die Beleuchtungsvorrichtung nach einem der voranstehenden Ansprüche, wobei das erste LED-Modul (501) mehrere Chroma-Koordinaten unter unterschiedlichen Intensitäten aufweist, wobei die unterschiedlichen Chroma-Koordinaten unter unterschiedlichen Intensitäten bei der Bestimmung der Leistungsverhältnisse referenziert sind/werden.

**13.** Die Beleuchtungsvorrichtung nach einem der voranstehenden Ansprüche, wobei eine Chroma-Messeinrichtung (511) zum Auffinden von Leistungsverhältnissen, die unterschiedlichen Ziel-Farbtemperaturen entsprechen, während der Herstellung verwendet wird, wobei die gefundenen Leistungsverhältnisse in einer Speichereinrichtung (508) gespeichert sind/werden, verwendet vom Controller (505), um die Leistungsverhältnisse zu bestimmen, die den Ziel-Farbtemperaturen entsprechen.

**14.** Die Beleuchtungsvorrichtung nach einem der voranstehenden Ansprüche, wobei der Treiber (504) eine PWM-Schaltung (512) umfasst, zum Erzeugen der ersten Ansteuerungsleistung, der zweiten Ansteuerungsleistung und der dritten Ansteuerungsleistung basierend auf Duty Ratios zum Einschalten des ersten LED-Moduls (501), des zweiten LED-Moduls (502) und des dritten LED-Moduls (503) entsprechend den Leistungsverhältnissen.

**Revendications**

**1.** Un appareil d'éclairage comprenant :

un premier module LED (501) émettant une première lumière d'une première température de couleur ;
un deuxième module LED (502) émettant une deuxième lumière d'une deuxième température de couleur;
un troisième module LED (503) émettant une troisième lumière d'une troisième température de couleur ;
un pilote (504) pour générer une première puissance de commande, une deuxième puissance de commande, une troisième puissance de commande alimentant respectivement le premier module LED (501), le deuxième module LED (502) et le troisième module LED (503) ; et
un contrôleur (505) pour déterminer un rapport de puissance entre la première puissance de commande, la deuxième puissance de commande et la troisième puissance de commande correspondant à une lumière mélangée avec une température de couleur cible mélangée par la première lumière, la deuxième lumière et la troisième lumière, les lumières mélangées de différentes températures de couleur cible ayant des coordonnées de chroma se trouvant dans une gamme de chroma prédéterminée,
**caractérisé en ce que** les pourcentages du flux lumineux du premier module LED (501), du deuxième module LED (502) et du troisième module LED (503) sont calculés sur la base de la Formule 1 suivante :

$$
\begin{bmatrix} Y_{W1} \\ Y_{W2} \\ Y_{W3} \end{bmatrix} = \begin{bmatrix} \dfrac{x_{W1}}{y_{W1}} & \dfrac{x_{W2}}{y_{W2}} & \dfrac{x_{W3}}{y_{W3}} \\ 1 & 1 & 1 \\ \dfrac{1-x_{W1}-y_{W1}}{y_{W1}} & \dfrac{1-x_{W2}-y_{W2}}{y_{W2}} & \dfrac{1-x_{W3}-y_{W3}}{y_{W3}} \end{bmatrix}^{-1} \begin{bmatrix} \dfrac{x}{y} \\ 1 \\ \dfrac{1-x-y}{y} \end{bmatrix} \quad \text{Formule 1}
$$

dans la Formule 1, $Y_{W1}$ est le pourcentage du flux lumineux de la première source de lumière blanche,
$Y_{W2}$ est le pourcentage du flux lumineux de la deuxième source de lumière blanche,
$Y_{W3}$ est le pourcentage du flux lumineux de la troisième source de lumière,
$(x_{W1}, y_{W1})$ sont les coordonnées de couleur de la première source de lumière blanche,
$(x_{W2}, y_{W2})$ sont les coordonnées de couleur de la seconde source de lumière blanche,
$(x_{W3}, y_{W3})$ sont les coordonnées de couleur de la troisième source de lumière, et
$(x, y)$ sont les coordonnées de la température de couleur cible.

**2.** L'appareil d'éclairage de la revendication 1, dans lequel la gamme de chroma prédéterminée correspond à un lieu planckien.

**3.** L'appareil d'éclairage de la revendication 1 ou 2, dans lequel les coordonnées de chroma de différentes lumières mélangées avec différentes températures de couleur cible sont proches du lieu planckien dans un seuil prédéterminé.

**4.** L'appareil d'éclairage de la revendication 3, dans lequel le seuil prédéterminé est inférieur à 10 % d'une gamme maximale.

**5.** L'appareil d'éclairage de l'une quelconque des revendications précédentes, dans lequel le contrôleur (505) a de multiples options de gamme de chroma (506) à sélectionner en plus du lieu planckien.

**6.** L'appareil d'éclairage de la revendication 5, comprenant en outre un commutateur manuel (507) pour un utilisateur pour sélectionner une option parmi les multiples options de gamme de chroma (506).

**7.** L'appareil d'éclairage de l'une quelconque des revendications précédentes, dans lequel le troisième module LED (503) comprend un dispositif LED couleur ajoutant une composante couleur pour ajuster la coordonnée de chroma de la lumière mélangée.

**8.** L'appareil d'éclairage de l'une quelconque des revendications précédentes, dans lequel de multiples rapports de puissance de la première puissance de commande, de la deuxième puissance de commande et de la puissance de commande sont enregistrés dans un dispositif de mémoire (508), le contrôleur (505) récupère les rapports de puissance et génère des signaux de commande correspondants pour le pilote (504) afin de générer des premières puissances de commande, des deuxièmes puissances de commande, des troisièmes puissances de commande correspondantes pour différentes températures de couleur cible.

**9.** L'appareil d'éclairage de la revendication 8, dans lequel, pour des températures de couleur cibles n'ayant pas de rapports de puissance correspondants, de multiples rapports de puissance adjacents sont récupérés pour calculer le rapport de puissance par le contrôleur (505).

**10.** L'appareil d'éclairage de la revendication 8 ou de la revendication 9, comprenant en outre un module sans fil (509) pour recevoir une table contenant des rapports de puissance correspondant à différentes températures de couleur cibles, le contrôleur (505) utilise la table pour commander le pilote (504) pour générer la première puissance de commande, la deuxième puissance de commande et la troisième puissance de commande.

**11.** L'appareil d'éclairage de l'une quelconque des revendications précédentes, comprenant en outre un commutateur manuel (507) ayant de multiples options correspondant à de multiples températures de couleur cibles, chaque option correspondant à un rapport de puissance à utiliser par le contrôleur (505).

**12.** L'appareil d'éclairage de l'une quelconque des revendications précédentes, dans lequel le premier module LED (501) a de multiples coordonnées de chroma sous différentes intensités, les différentes coordonnées de chroma sous différentes intensités sont référencées lors de la détermination des rapports de puissance.

**13.** L'appareil d'éclairage de l'une quelconque des revendications précédentes, dans lequel un dispositif de mesure de chroma (511) est utilisé pour trouver des rapports de puissance correspondant à différentes températures de couleur cibles pendant la fabrication, les rapports de puissance trouvés sont stockés dans un dispositif de mémoire (508) utilisé par le contrôleur (505) pour déterminer les rapports de puissance correspondant aux températures de couleur cibles.

**14.** L'appareil d'éclairage de l'une quelconque des revendications précédentes, dans lequel le pilote (504) comprend un circuit PWM (512) pour générer la première puissance de commande, la deuxième puissance de commande et la troisième puissance de commande sur la base de rapports duty pour allumer le premier module LED (501), le deuxième module LED (502) et le troisième module LED (503) correspondant aux rapports de puissance.

S10

chroma coordinates of target color temperature

S20

chroma coordinates of LED modules

S30

calculate lux for each LED module

S40

drive the LED modules to mix target color temperature

Fig. 1

W1    W3    W2

10

14

Fig.2

Fig. 3

Find lux percentage of LED modules based on flume — S301

Get lux of target color temperature — S302

calculate corresponding lux value for LED modules — S303

Fig. 4

target color coordinate
receiving module  — 21

light source color coordinates
receiving module  — 22

flux receiving module  — 23

illumination light
receiving module  — 24

— 20

Fig. 5

flux percentage receiving
unit  — 231

total luminous flux
receiving unit  — 232

light source luminous flux
receiving unit  — 233

— 23

Fig. 6

Fig. 7

Fig. 8A

Fig. 8B

**EP 3 754 252 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120326627 A1
- US 20100295464 A1
- US 20150108921 A1
- US 2008238335 A1